# EUROPEAN PATENT APPLICATION

(11) **EP 4 813 770 A1**
(43) Date of publication of application: **30.09.2026**
(21) Application number: 25166285.4
(22) Date of filing: 26.03.2025
(51) Int. Cl.: B60T 11/32, B60T 17/04, B60T 17/18

(54) **VALVE ASSEMBLY, VEHICULAR BRAKING SYSTEM, VEHICLE AND METHOD OF CONTROLLING PRESSURE AND PROVIDING CIRCUIT PROTECTION**

(71) Applicant: ZF CV Systems Europe BV, 1170 Brüssel (BE)
(72) Inventor: OWSIAK, Kamil, 50-506 Wroclaw (PL); KOPCIUCH, Wojciech, 52-214 Wroclaw (PL)
(74) Representative: Copi, Joachim

(57) **Abstract**

The invention relates to a valve assembly (1) for pressure control and circuit protection in a vehicular pneumatic circuit (2), comprising:
- an inlet (3) configured to receive compressed air (12) from a supply,
- an outlet (4) configured to provide compressed air (12) to the vehicular pneumatic circuit (2),
- a first switching valve (5) and a second switching valve (6) arranged in parallel between the inlet (3) and the outlet (4),
- a first pressure sensor (7) being arranged downstream of the first switching valve (5) and the second switching valve (6) and being configured to provide an outlet pressure signal (p₁), and
- a control unit (8) configured to
o receive the outlet pressure signal (p₁) from the first pressure sensor (7),
o determine
▪ a circuit cut-off condition (10) of the vehicular pneumatic circuit (2) based on the outlet pressure signal (p₁),
▪ a compressed air demand (9) of the vehicular pneumatic circuit (2) based on the outlet pressure signal (p₁) and a predefined set pressure value (15) of the vehicular pneumatic circuit (2), and/or
▪ a time control condition (18) for providing compressed air (12) to the vehicular pneumatic circuit (2) according to a stored time control setting (19), and

o actuating at least one of the first switching valve (5) and the second switching valve (6) depending on the determined circuit cut-off condition (10), compressed air demand (9) and/or time control condition (18).

## Description

The present disclosure relates to a valve assembly for pressure control and circuit protection in a vehicular pneumatic circuit, a vehicular braking system, a vehicle and a method of controlling pressure and providing circuit protection in a vehicular pneumatic circuit.

Generally, vehicular pneumatic circuits may be used to supply compressed air to pneumatic components arranged in a vehicle. Depending on a function of these pneumatic components, which may for instance be a safety-related function, and depending on technical requirements of the pneumatic components, it may be required or at least desirable to precisely control the pressure in the vehicular pneumatic circuit. For instance, it may be necessary to maintain a predefined minimum or maximum pressure of the compressed air in the vehicular pneumatic circuit for proper functioning of the pneumatic components or due to safety-related conditions. In particular in vehicular pneumatic circuits providing compressed air to pneumatic components with safety-related functions, e.g. such as to a vehicular braking system, it may be furthermore required to provide a cut-off function to immediately disconnect a defective vehicular pneumatic circuit from the pneumatic component or from further connected vehicular pneumatic circuits upon detection of the failure.

In order to provide pressure control and circuit protection in vehicular pneumatic circuits, it is generally common to implement at least one of a protectional valve for disconnecting a defective vehicular pneumatic circuit, a pressure limiting valve for limiting the pressure in the vehicular pneumatic circuit and a supply line for providing compressed air to the vehicular pneumatic circuit. According to current practice, mechanical valves are frequently used for the described functions due to their simple and robust structure and to the self-control option using system pressure. Nevertheless, current technical solutions also consider to use solenoid valves for a higher flexibility in pressure control. For instance, in EP 3 686 074 A1 a multi-circuit safety valve of a compressed air system of a motor vehicle is described, the multi-circuit safety valve comprising circuit safety valves of which at least one circuit safety valve is configured as a protectional valve which can be actively controlled by an electronic control device. The at least one actively controllable protectional valve may be implemented as a solenoid switching valve. Still, current valve concepts may show a complex valve architecture and inflexible structures, requiring large installation spaces as well as considerable assembly and maintenance effort.

It is desirable to provide technical approaches which allow for an increased efficiency and flexibility of pressure control and circuit protection in vehicular pneumatic circuits. In view of the above, it is a general object of the present invention to address one or more of the disadvantages associated with the prior art. In particular, it is an object of the present invention to provide a simple and compact valve assembly for efficient pressure control and circuit protection in a vehicular pneumatic circuit while increasing the flexibility of using the valve assembly for the afore-mentioned functions. It is a further object of the present invention to provide suitable systems and methods for efficient implementation of the valve assembly.

Aspects and embodiments of the invention provide a valve assembly, a vehicular braking system, a vehicle and a method of controlling pressure and providing circuit protection in a vehicular pneumatic circuit as indicated in the appended claims.

According to a first aspect of the present invention, there is provided a valve assembly for pressure control and circuit protection in a vehicular pneumatic circuit, comprising:
- an inlet configured to receive compressed air from a supply,
- an outlet configured to provide compressed air to the vehicular pneumatic circuit,
- a first switching valve and a second switching valve arranged in parallel between the inlet and the outlet,
- a first pressure sensor being arranged downstream of the first switching valve and the second switching valve and being configured to provide an outlet pressure signal, and
- a control unit configured to
   o receive the outlet pressure signal from the first pressure sensor,
   ∘ determine
      ▪ a circuit cut-off condition of the vehicular pneumatic circuit based on the outlet pressure signal,
      ▪ a compressed air demand of the vehicular pneumatic circuit based on the outlet pressure signal and a predefined set pressure value of the vehicular pneumatic circuit, and/or
      ▪ a time control condition for providing compressed air to the vehicular pneumatic circuit according to a stored time control setting, and
   ∘ actuating at least one of the first switching valve and the second switching valve depending on the determined circuit cut-off condition, compressed air demand and/or time control condition.

By providing a valve assembly comprising a first and second switching valve being controlled by a sensor-based outlet pressure signal and/or a predefined time control setting, a simple and compact valve assembly for pressure control and circuit protection is made available, wherein the option to actuate the first, the second or both switching valves increases the flexibility of using the valve assembly, in particular regarding the pressure control aspect. The provided valve assembly efficiently combines the pressure control function and the circuit protection function by actuating at least one of the first switching valve and the second switching valve based on the received outlet pressure signal and/or a time control condition. The provided valve assembly is, unlike conventional valves commonly used for vehicular pneumatic circuits, not limited to a single open/close function. Rather, the provided valve assembly allows for controllable compressed air quantities due to the option to actuate the first, the second or both switching valves, wherein the switching valves may comprise the same or different valve sizes or variable flow cross-sections. Hence increased flexibility in using the valve assembly for pressure control and circuit protection is provided.

Furthermore, the use of a control unit configured to actuate the first switching valve and the second switching valve may provide the option to use electrically controllable solenoid valves, which may have advantages over mechanical valves regarding long time stability, fast reactions and the general tendency to use electrical components in vehicles for precise function control and digital interconnection of vehicle parts. Furthermore, hysteresis, wear and drift may be reduced compared to mechanical valve solutions. Actuating at least one of the first switching valve and the second switching valve may in particular correspond to opening or closing the actuated valve. Alternatively, the actuation may comprise adjusting at least one of the first switching valve and the second switching valve, which may in particular apply to switching valves with an adjustable flow cross-section.

The provided valve assembly does not require large installation spaces and can be mounted in a vehicle with low effort. Since signal analysis conditions and valve control instructions may be stored in the control unit in an accessible manner, these can be easily adapted and optimized according to individual needs. For instance, the valve control instructions can be adapted electronically by software customization.

Generally, a vehicular pneumatic circuit may be an arrangement of interconnected pneumatic components being configured to supply compressed air to at least one pneumatic consumer, such as a vehicle brake. The compressed air may be received by a suitable supply, such as a vehicular air compressor. The provided valve assembly may be arranged between the supply and the vehicular pneumatic circuit in order to control and deliver a defined amount of compressed air to the vehicular pneumatic circuit according to a current need represented by the determined compressed air demand or the determined time control condition and to cut off the vehicular pneumatic circuit in case of a detected failure represented by the determined circuit cut-off condition. The valve assembly may serve for an initial filling and subsequent refilling (replenishment) of the vehicular pneumatic circuit with compressed air until the predefined set pressure value is reached according to the received outlet pressure signal or according to the stored time control setting.

For instance, the vehicular pneumatic circuit may be a braking circuit. Due to their safety-related function, vehicular braking systems frequently comprise a multi-circuit arrangement in order to provide sufficient brake pressure even in case of a circuit failure. These multi-circuit arrangements require a protective valve concept with a reliable cut-off function in order to ensure a fast disconnection of the malfunctioning braking circuit, thus protecting connected system components and further braking circuits from pressure loss. The provided valve assembly may in particular be used for such a multi-circuit configuration for circuit protection and pressure control. Using the cut-off function of the provided valve assembly, further circuits and components may be protected in a reliable and fast manner. If implemented in a vehicular braking system, the provided valve assembly may ensure that sufficient braking power is maintained at the vehicle brakes in case of a circuit failure. In particular, the provided valve assembly ensures that further braking circuits may still be operated at a maximum working pressure in case of a circuit failure, since the provided valve assembly allows to increase the pressure in the further braking circuits again after a pressure drop may have occurred in the further braking circuits due to the circuit failure in the affected braking circuit. In other words, the further braking circuits can still be pumped up to a maximum working pressure such as, e.g., 12 to 13 bar even if the circuit failure in the affected braking circuit has led to a pressure drop in the further braking circuits.

As indicated above, the control unit may be configured to determine a compressed air demand based on the outlet pressure signal and the predefined set pressure value of the vehicular pneumatic circuit. For this purpose, the control unit may be configured to compare the received outlet pressure signal with the predefined set pressure value. According to a simple analysis concept, the compressed air demand may be determined based on a pressure difference between the received outlet pressure signal and the predefined set pressure value. The set pressure value may refer to a discrete working pressure value or to a lower or upper threshold limiting a predefined value range. Depending on the determined compressed air demand, various valve states may be set. For instance, an initial filling sequence requiring a high amount of compressed air to be supplied to the vehicular pneumatic circuit may result in an actuation of the first switching valve and the second switching valve in combination. For example, both switching valves may be opened or set to a maximum flow cross-section. Furthermore, a subsequent refilling after a low consumption event requiring a small amount of compressed air to be supplied to the vehicular pneumatic circuit may result in an actuation of either the first switching valve or the second switching valve. Likewise, a subsequent refilling after a high consumption event requiring an intermediate amount of compressed air to be supplied to the vehicular pneumatic circuit may result in an actuation of either the first switching valve or the second switching valve. Alternatively, an initial filling sequence or a subsequent refilling can be time-controlled according to the stored time control setting. For instance, an initial filling sequence may comprise a valve actuation of the first and second switching valve for a predefined time period independent of the provided outlet pressure signal.

As indicated above, the control unit is configured to determine a circuit cut-off condition of the vehicular pneumatic circuit based on the outlet pressure signal and the predefined set pressure value of the vehicular pneumatic circuit. For this purpose, the control unit may be configured to compare the received outlet pressure signal with the predefined set pressure value. According to a simple analysis concept, the circuit cut-off condition may be determined based on a pressure difference between the received outlet pressure signal and the predefined set pressure value. If a circuit failure is caused by a leakage condition, an exceptionally high pressure drop can be observed. Hence, a predefined pressure drop beyond normal working conditions, which may be higher than typical consumption or normal leakage pressure drops, may be used as an indicator for a circuit cut-off condition. Alternatively or additionally, a time-related pressure analysis may be performed in order to examine a pressure development over time, which may allow to predict an impending circuit cut-off condition at an early stage. Upon determination of a circuit cut-off condition, the control unit may immediately close the first switching valve and the second switching valve. In addition, the control unit may be configured to block any subsequent actuation of the first switching valve and the second switching valve until a reset condition is met, for instance in the course of a vehicle inspection. Generally, the circuit cut-off condition may have priority over the determined compressed air demand in order to ensure reliable circuit protection. The control unit may, for instance, be a central control unit of the vehicle or a control unit assigned to a specific vehicular function, such as e.g. a braking control unit.

According to an embodiment of the first aspect of the present invention, the vehicular pneumatic circuit may be configured as a pressure-limited circuit with a predefined set pressure value below a maximum supply pressure of the compressed air received by the supply and wherein the valve assembly may be configured to limit the pressure of the compressed air being provided to the vehicular pneumatic circuit. In this way, a further pressure controlling function may be implemented using the provided valve assembly such that even more efficient pressure control and circuit protection may be provided by the valve assembly. Hence, a cut-off function for circuit protection, a pressure limiting function for a pressure-limited circuit as well as a filling and refilling function for compressed air supply to the vehicular pneumatic circuit may be combined based on the outlet pressure signal, the predefined set pressure value and/or the time control setting. Thus, the valve assembly may form a combined pressure limiting, overflow and protection valve assembly avoiding the need to install a plurality of individual valves for the described functions. The pressure-limited circuit may be restricted to a lower pressure compared to the pressure received at the inlet. According to a non-limiting example, upon completion of a filling or refilling, the pressure-limited circuit may comprise a pressure of 8 bar wherein the pressure being present at the inlet may amount to 12,5 bar.

According to an embodiment of the first aspect of the present invention, the first switching valve and the second switching valve may be configured to provide different flow rates of compressed air to the outlet. In this way, even higher flexibility may be provided regarding compressed air quantities supplied by the valve assembly to the vehicular pneumatic circuit. For instance, actuation of either the first or second switching valve may be used for low and medium flow rates and actuation of both switching valves may be used for high flow rates. For example, a slow refilling mode using a low flow rate may allow for a more precise and stable pressure control in case of low pressure differences between the outlet pressure signal and the predefined set pressure value. In case of a pressure-limited circuit, a risk of a pressure increase above the predefined pressure limit can be minimized. In contrast, a fast refilling mode using medium and high flow rates may allow for a fast and efficient pressure increase to rapidly reach a desired working pressure in the vehicular pneumatic circuit. Furthermore, the switching valves may be equipped with individual switching properties according to the different flow rates. For instance, the switching valve configured to provide a lower flow rate may be configured as a smaller valve implying lower cost and lower energy consumption so that overall cost and energy consumption of the valve assembly can be optimized. According to a refined embodiment further described below, the first switching valve and the second switching valve may comprise different nominal sizes. In addition or alternatively, at least one of the first switching valve and the second switching valve may comprise an adjustable flow cross-section. Hence, different flow rates may, for instance, be implemented by providing different constructional valve sizes, by providing at least one restriction element or by providing at least one adjustable restriction element. Depending on the determined compressed air demand, various valve states may be set considering the described embodiment. For instance, an initial filling sequence requiring a high amount of compressed air to be supplied to the vehicular pneumatic circuit may result in an actuation of the switching valve configured to provide the higher flow rate or in an actuation of the first switching valve and the second switching valve in combination. For example, the switching valve configured to provide the higher flow rate or both switching valves may be opened or set to a maximum flow cross-section. Furthermore, a subsequent refilling after a low consumption event requiring a small amount of compressed air to be supplied to the vehicular pneumatic circuit may result in an actuation of the switching valve configured to provide the lower flow rate. In addition, a subsequent refilling after a high consumption event requiring an intermediate or high amount of compressed air to be supplied to the vehicular pneumatic circuit may result in an actuation of the switching valve configured to provide the higher flow rate.

According to a refined embodiment, the first switching valve and the second switching valve may comprise different nominal sizes. In this way, a simple, robust and cost-effective implementation of switching valves configured to supply different flow rates of compressed air can be provided. The nominal size of the switching valve may, depending on the selected valve type, correspond to a constructional diameter of a valve seat opening of the switching valve.

According to an embodiment of the first aspect of the present invention, the first switching valve and the second switching valve may be arranged in a common valve housing. In this way, a compact ready-to-install valve assembly can be provided. Optionally, the first pressure sensor and an optional second pressure sensor discussed below may be also arranged in the common valve housing. The control unit may be arranged outside of the common valve housing. The common valve housing may comprise the inlet and the outlet for connection to the supply and to the vehicular pneumatic circuit as well as a suitable signal port for providing a signal connection to the control unit.

According to an embodiment of the first aspect of the present invention, a second pressure sensor may be arranged upstream of the first switching valve and the second switching valve, the second pressure sensor being configured to provide an inlet pressure signal, and the control unit may be configured to
- receive the inlet pressure signal from the second pressure sensor,
- determine a compressed air supply condition based on the inlet pressure signal, and
- actuate at least one of the first switching valve and the second switching valve depending on the determined compressed air supply condition and depending on the determined circuit cut-off condition, compressed air demand and/or time control condition.

In this way, a more precise pressure control additionally considering an inlet pressure signal may be implemented using the provided valve assembly. For instance, the compressed air supply condition may refer to a predefined minimum inlet pressure and at least one of the first switching valve and the second switching valve may be actuated only if the inlet pressure signal exceeds the defined minimum pressure. The control unit may be configured to compare the received inlet pressure signal with the defined minimum pressure and to actuate the switching valves accordingly. By providing a minimum inlet pressure to the valve assembly, an efficiency of a filling or refilling for supplying compressed air to the vehicular pneumatic circuit may be increased, since the filling time or refilling time may be reduced with a higher inlet pressure. Nevertheless, according to an alternative option, the control unit may be configured to actuate at least one of the first switching valve and the second switching valve at the beginning of an initial filling sequence independently of a compressed air supply condition, so that an immediate pressure build-up can be performed upon an initial filling trigger, such as e.g. upon starting the vehicle. Furthermore, in order to ensure an effective circuit protection, the circuit cut-off condition may have priority over analysis of the compressed air supply condition and the compressed air demand determination. Hence, the first switching valve and the second switching valve may be closed or blocked from opening in case of a present circuit cut-off condition independently of the compressed air supply condition and the determined compressed air demand.

According to an embodiment of the first aspect of the present invention, the first switching valve and the second switching valve may be configured as electrically controllable solenoid valves, wherein the control unit may be configured as an electronic control unit. In this way, an efficient and powerful pressure control and circuit protection may be implemented using the provided valve assembly. As indicated above, electrically controllable solenoid valves may have advantages over mechanical valves regarding long time stability, fast reactions and the general tendency to use electrical components in vehicles for precise function control and digital interconnection of vehicle parts. Furthermore, hysteresis, wear and drift may be reduced compared to mechanical valve solutions. The electronic control unit may provide advanced adaptation options due to a usually software-based operation principle. Hence, the pressure signal analysis or valve actuation conditions can be easily adjusted by software adaptation. According to a refined embodiment, the electronic control unit may be an electronic braking control unit of the vehicle. In this way, the valve assembly may be controlled by an electronic control unit configured to perform safety-related braking functions of the vehicle. Accordingly, the valve assembly may beneficially be used for pressure control and circuit protection of a braking circuit of a vehicular braking system.

According to an embodiment of the first aspect of the present invention, at least one of the first switching valve and the second switching valve may be configured as a 2/2 way valve. In this way, a cost-effective and compact valve assembly is provided. In particular, 2/2 way valves may provide a simple open/close configuration allowing for fast and reliable pressure control and circuit protection reactions. According to a refined embodiment, at least one of the first switching valve and the second switching valve may be equipped with a return spring allowing for an automatic valve reset in the absence of an actuation signal.

According to a second aspect of the present invention, there is provided a vehicular braking system comprising at least one pneumatic braking circuit and the valve assembly according to any aspect or embodiment described herein. In accordance with the embodiment, the vehicular pneumatic circuit described above may be configured as a pneumatic braking circuit. By comprising the described valve assembly, the vehicular braking system may advantageously benefit from the increased flexibility and efficiency of pressure control and circuit protection regarding the pneumatic braking circuit. Hence, availability and reliability of the provided vehicular braking system can be increased significantly. Preferably, the vehicular braking system may comprise a multi-circuit configuration with multiple pneumatic braking circuits and at least one of the pneumatic braking circuits may be protected and controlled by the provided valve assembly.

According to a third aspect of the present invention, there is provided a vehicle, in particular a commercial vehicle, comprising the valve assembly according to any aspect or embodiment described herein or comprising the vehicular braking system according to the second aspect of the present invention. By comprising the described valve assembly or the described vehicular braking system, the vehicle may advantageously benefit from the increased flexibility and efficiency of pressure control and circuit protection regarding a vehicular pneumatic circuit of the vehicle. Hence, pneumatic functions of a pneumatic system installed in the vehicle can be improved. For instance, the pneumatic system may correspond to the described vehicular braking system. The described vehicle may be a motor vehicle of any type designed to transport people and/or cargo. In particular, the vehicle may be a commercial vehicle, such as e.g. a truck or a bus. Commercial vehicles may show a high consumption of compressed air due to their typical structure and dimensions. For instance, the commercial vehicle may comprise at least one of a pneumatic braking system, a pneumatic air suspension system and a tire inflation system. Using the provided valve assembly in the described commercial vehicle may lead to improved pneumatic functions, thus increasing the overall operating efficiency of the commercial vehicle.

According to a fourth aspect of the present invention, a method of controlling pressure and providing circuit protection in a vehicular pneumatic circuit is provided, wherein the vehicular pneumatic circuit is connected to the valve assembly according to any aspect or embodiment described herein, wherein the method comprises:
- providing, by the first pressure sensor of the valve assembly, an outlet pressure signal to the control unit,
- determining, by the control unit,
   ∘ a circuit cut-off condition in the vehicular pneumatic circuit based on the outlet pressure signal,
   ∘ a compressed air demand in the vehicular pneumatic circuit based on the outlet pressure signal and a predefined set pressure value of the vehicular pneumatic circuit, and/or
   ∘ a time control condition for providing compressed air to the vehicular pneumatic circuit according to a stored time control setting, and
- actuating at least one of the first switching valve and the second switching valve of the valve assembly depending on the determined circuit cut-off condition, compressed air demand and/or time control condition.

With the provided method, efficiency and flexibility of pressure control and circuit protection in the vehicular pneumatic circuit may beneficially be increased. For instance, machine-readable instructions may be stored and performed by the control unit for implementation of the described steps. The control unit may comprise a processing unit as well as signal connections to the first pressure sensor and to the first switching valve and the second switching valve in order to perform the described steps.

According to an embodiment of the fourth aspect of the present invention, the method further comprises:
- providing, by a second pressure sensor of the valve assembly, an inlet pressure signal to the control unit,
- determining, by the control unit, a compressed air supply condition based on the inlet pressure signal, and
- actuating at least one of the first switching valve and the second switching valve of the valve assembly depending on the determined compressed air supply condition and depending on the determined circuit cut-off condition, compressed air demand and/or time control condition.

In this way, a more precise pressure control additionally considering an inlet pressure signal may be achieved upon performing the provided method. For instance, the compressed air supply condition may refer to a predefined minimum inlet pressure and at least one of the first switching valve and the second switching valve may be actuated only if the inlet pressure signal exceeds the defined minimum pressure. In accordance with the embodiment, the control unit may comprise a further signal connection to the second pressure sensor.

The above and other characteristics will become clear from the following description of illustrative, non-restrictive examples, which will be further outlined with reference to the appended drawings. The drawings are not necessarily to scale. Some features could be exaggerated or minimized to show details of particular components. Therefore, specific structural and functional details disclosed herein are not to be interpreted as limiting, but merely as a representative basis for teaching one skilled in the art.
- Figs. 1a/1b: provide a schematic circuit representation and a sectional view of a valve assembly according to an embodiment in a first functional state.
- Figs. 2a/2b: show the valve assembly in a second functional state.
- Figs. 3a/3b: show the valve assembly in a third functional state.
- Figs. 4a/4b: show the valve assembly in a fourth functional state.
- Fig. 5: illustrates a side view of a vehicle comprising a vehicular braking system.
- Fig. 6: provides a simplified flow chart illustrating a method of controlling pressure and providing circuit protection in a vehicular pneumatic circuit.

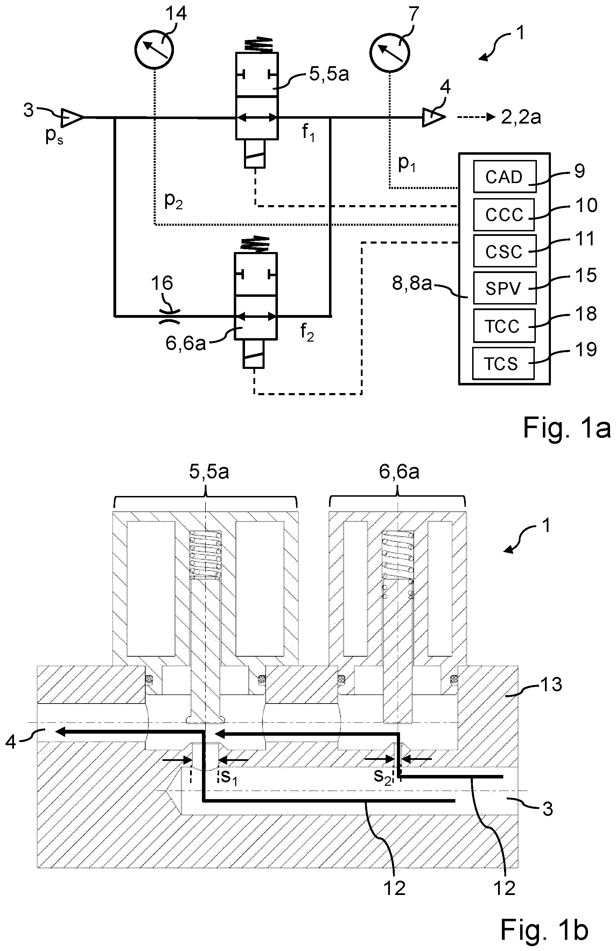

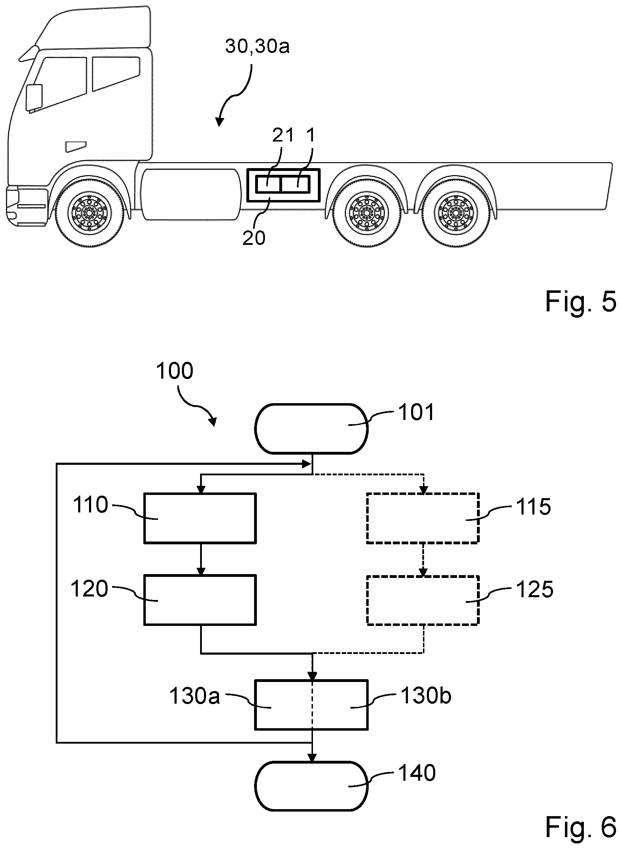

The circuit representations and sectional views in Figs. 1a to 4b schematically illustrate a valve assembly 1 according to an embodiment in different functional states. The valve assembly 1 is configured to provide pressure control and circuit protection in a vehicular pneumatic circuit 2. The valve assembly 1 may be implemented, for instance, in a vehicular braking system 20 of a vehicle 30 shown in Fig. 5.

As depicted in Figs. 1a and 1b, the valve assembly 1 comprises an inlet 3. The inlet 3 is configured to receive compressed air 12 from a supply (not shown), which may be a vehicular air compressor. Furthermore, the valve assembly 1 comprises an outlet 4 configured to provide compressed air 12 to the vehicular pneumatic circuit 2. As further illustrated in Figs. 1a and 1b, a first switching valve 5 and a second switching valve 6 are arranged in parallel between the inlet 3 and the outlet 4. As apparent from Fig. 1b, the first switching valve 5 and the second switching valve 6 may be arranged in a common valve housing 13, thus providing a compact ready-to-install valve assembly 1. According to the embodiment depicted in Figs. 1a to 4b, the first switching valve 5 and the second switching valve 6 are configured as electrically controllable solenoid valves 5a, 6a. As apparent from the circuit representations in Figs. 1a to 4a, the first switching valve 5 and the second switching valve 6 are configured as 2/2 way valves.

Furthermore, a first pressure sensor 7 depicted in Fig. 1a is arranged downstream of the first switching valve 5 and the second switching valve 6. The first pressure sensor 7 is configured to provide an outlet pressure signal p₁ to a control unit 8. According to the embodiment depicted in Figs. 1a to 4a, a second pressure sensor 14 is arranged upstream of the first switching valve 5 and the second switching valve 6. The second pressure 14 is configured to provide an inlet pressure signal p₂ to the control unit 8. According to the depicted embodiment, the control unit 8 is implemented as an electronic control unit 8a and configured to electrically control the solenoid valves 5a, 6a. In particular, the control unit 8 may be a braking control unit of the vehicle 30 depicted in Fig. 5.

The control unit 8 is configured to receive the outlet pressure signal p₁ from the first pressure sensor 7 and the inlet pressure signal p₂ from the second pressure sensor 14. Furthermore, the control unit 8 is configured to determine a circuit cut-off condition 10 of the vehicular pneumatic circuit 2 based on the outlet pressure signal p₁, a compressed air demand 9 of the vehicular pneumatic circuit 2 based on the outlet pressure signal p₁ and a predefined set pressure value 15 stored in the control unit 8 and, for instance in the course of an initial filling sequence, a time control condition 18 for providing compressed air 12 to the vehicular pneumatic circuit 2 according to a stored time control setting 19. In addition, the control unit 8 is configured to determine a compressed air supply condition 11 based on the inlet pressure signal p₂. Moreover, the control unit 8 is configured to actuate at least one of the first switching valve 5 and the second switching valve 6 depending on the determined compressed air supply condition 11 and depending on the determined circuit cut-off condition 10, compressed air demand 9 and/or time control condition 18.

Due to the option to provide variable compressed air quantities by actuating either the first switching valve 5 or the second switching valve 6 or both switching valves 5, 6, the valve assembly 1 allows for an increased efficiency and flexibility of pressure control and circuit protection in the vehicular pneumatic circuit 2. Furthermore, the valve assembly 1 comprises a simple and compact design and may show an improved long term stability and responsiveness compared to mechanical valve solutions. By furthermore considering an inlet pressure signal p₂, a minimum inlet pressure may be defined to further increase the efficiency of providing compressed air 12 to the vehicular pneumatic circuit 2.

According to the embodiment depicted in Figs. 1a to 4b, the vehicular pneumatic circuit 2 is configured as a pressure-limited circuit 2a with a predefined set pressure value 15 below a maximum supply pressure pₛ of the compressed air 12 received by the supply. Accordingly, the valve assembly 1 is configured to limit the pressure of the compressed air 12 being provided to the vehicular pneumatic circuit 2. Hence, the valve assembly 1 beneficially combines a pressure limiting function, a filling and refilling function as well as a cut-off function for pressure control and circuit protection.

As further apparent from Figs. 1a to 4b, the first switching valve 5 and the second switching valve 6 are configured to provide different flow rates f₁, f₂ of compressed air 12 to the outlet 4 in order to increase the flexibility and precision level of pressure control in the vehicular pneumatic circuit 2. For this, the first switching valve 5 and the second switching valve 6 comprise different nominal sizes s₁, s₂. As apparent from Figs. 1b to 4b, the first switching valve 5 comprises a larger nominal size s₁ compared to the nominal size s₂ of the second switching valve 6, the smaller nominal size s₂ being represented by a restriction element 16 in Figs. 1a to 4a. Hence, the first switching valve 5 is configured to provide a higher flow rate of compressed air 12 to the outlet 4 and the second switching valve 6 is configured to provide a lower flow rate of compressed air 12 to the outlet 4. According to alternative embodiments, at least one of the first switching valve 5 and the second switching valve 6 may be configured as a valve with an adjustable flow cross-section.

Figs. 1a to 4b show different functional states of the valve assembly 1 according to various valve control results. Figs. 1a and 1b represent an initial filling sequence, for instance upon a start of the vehicle 30, requiring a high amount of compressed air 12 to be supplied to the vehicular pneumatic circuit 2. As illustrated, both the first switching valve 5 and the second switching valve 6 are set to an open state, thus allowing for a maximum flow rate of compressed air 12 to be supplied to the outlet 4 until the predefined set pressure value 15 is reached according to the outlet pressure signal p₁ or until a predefined time period according to the time control condition 18 has expired.

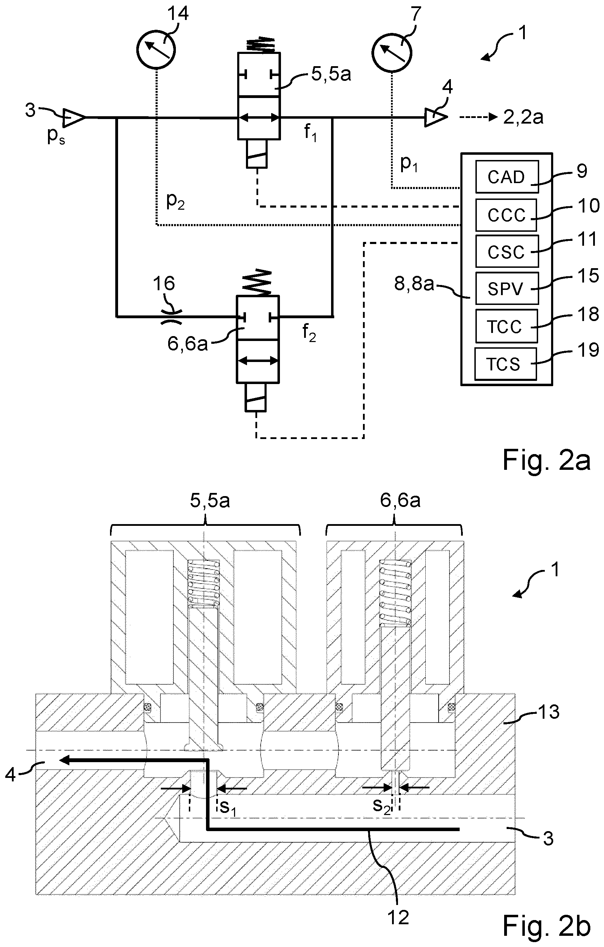

Figs. 2a and 2b represent a subsequent refilling which may be performed, for instance, after a high consumption of compressed air 12 resulting in a major compressed air demand. As illustrated, the first switching valve 5 comprising a larger nominal size s₁ and hence being configured to provide a larger flow rate of compressed air 12 to the outlet 4 is set to an open state, whereas the second switching valve 6 remains in a closed state. In this way, an adequate amount of compressed air 12 may be supplied to the vehicle pneumatic circuit 2 with a reduced risk to exceed the predefined set pressure value 15 compared to a filling or refilling according to which both switching valves 5, 6 are set to an open state.

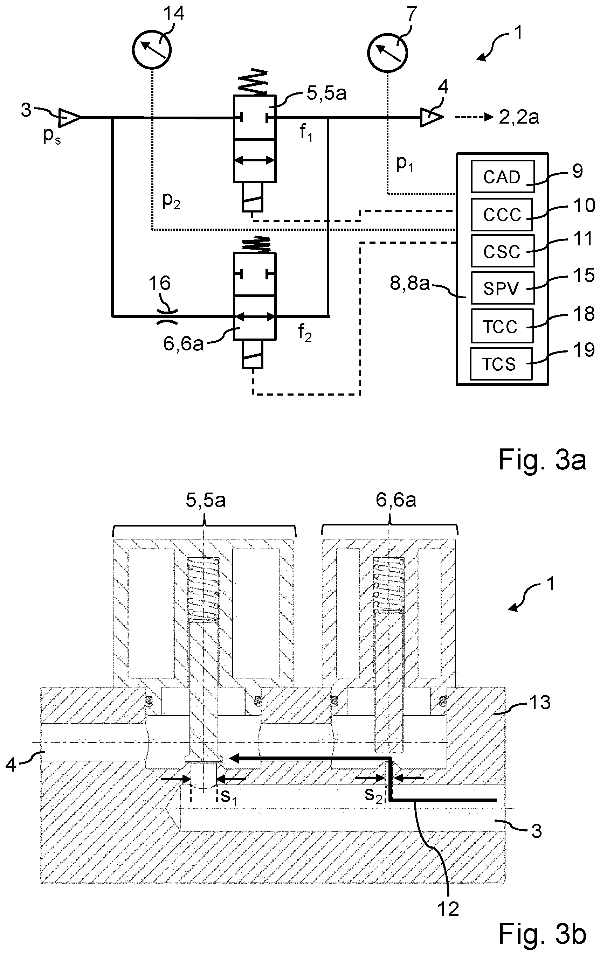

Figs. 3a and 3b represent a subsequent refilling which may be performed, for instance, after a low consumption of compressed air 12 resulting in a minor compressed air demand. As illustrated, the second switching valve 6 comprising a smaller nominal size s₂ and hence being configured to provide a lower flow rate of compressed air 12 to the outlet 4 is set to an open state, whereas the first switching valve 5 remains in a closed state. In this way, an adequate amount of compressed air 12 may be supplied to the vehicle pneumatic circuit 2 with a reduced risk to exceed the predefined set pressure value 15 compared to a filling or refilling opening the first switching valve 5 or both switching valves 5, 6 to supply compressed air 12 to the outlet 4.

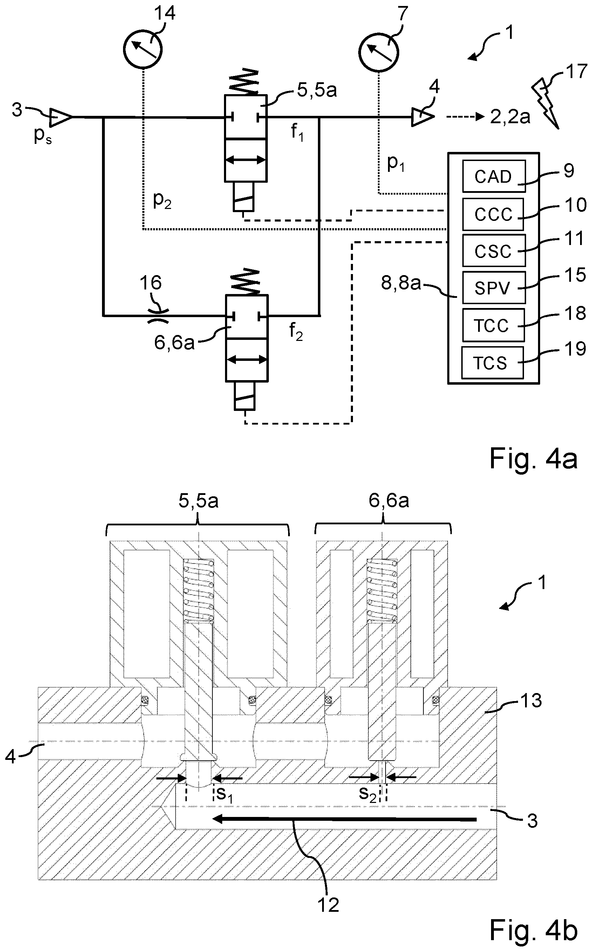

Figs. 4a and 4b illustrate a functional state of the valve assembly 1 in case of a detected circuit failure 17, such as an abnormal leakage event, represented by a determined circuit cut-off condition 10. As illustrated, both switching valves 5, 6 are set to a closed state and prevented from being set to an open state in order to ensure a reliable circuit protection.

Fig. 5 provides a simplified side view of a vehicle 30 being configured as a commercial vehicle 30a, here as a truck. The vehicle 30 comprises a vehicular braking system 20 with at least one pneumatic braking circuit 21 and a valve assembly 1 for pressure control and circuit protection in the pneumatic braking circuit 21. The valve assembly 1 may generally correspond to the valve assembly 1 according to any aspect or embodiment described herein. According to an embodiment, the valve assembly 1 represented in Fig. 5 may correspond to the valve assembly 1 depicted in Figs. 1a to 4b. The vehicular braking system 20 may comprise a multi-circuit configuration with multiple pneumatic braking circuits 21. The valve assembly 1 may control and protect at least one of the pneumatic braking circuits 21, thus providing precise and efficient pressure control and ensuring that sufficient braking power is maintained at the vehicle brakes in case of a circuit failure 17. In particular, the provided valve assembly 1 ensures that further braking circuits 21 may still be operated at a maximum working pressure in case of the circuit failure 17, since the provided valve assembly 1 allows to increase the pressure in the further braking circuits 21 again after a pressure drop may have occurred in the further braking circuits 21 due to the circuit failure 17 in the affected braking circuit 21.

Fig. 6 schematically illustrates a method 100 of controlling pressure and providing circuit protection in a vehicular pneumatic circuit 2. The vehicular pneumatic circuit 2 is connected to the valve assembly 1 according to any aspect or embodiment described herein. In particular, the valve assembly 1 may correspond to the valve assembly 1 depicted in Figs. 1a to 4b. The method 100 may comprise a start 101 and an end 140, which may concur with a start and shutdown of the vehicle 30. The method 100 comprises a step 110 of providing, by the first pressure sensor 7 of the valve assembly 1, an outlet pressure signal p₁ to the control unit 8. The method 100 comprises the further step 120 of determining, by the control unit 8, a circuit cut-off condition 10 in the vehicular pneumatic circuit 2 based on the outlet pressure signal p₁, a compressed air demand 9 in the vehicular pneumatic circuit 2 based on the outlet pressure signal p₁ and a predefined set pressure value 15 of the vehicular pneumatic circuit 2, and/or a time control condition 18 for providing compressed air 12 to the vehicular pneumatic circuit 2 according to a stored time control setting 19. In an optional step 115, an inlet pressure signal p₂ may be provided to the control unit 8 by a second pressure sensor 14 of the valve assembly 1. In a further optional step 125, a compressed air supply condition 11 may be determined by the control unit 8 based on the inlet pressure signal p₂. The method 100 furthermore comprises the step 130a of actuating at least one of the first switching valve 5 and the second switching valve 6 of the valve assembly 1 depending on the determined circuit cut-off condition 10, the compressed air demand 9 and/or the time control condition 18. If the optional steps 115 and 125 are performed, the method 100 may alternatively comprise the step 130b of actuating at least one of the first switching valve 5 and the second switching valve 6 of the valve assembly 1 depending on the determined compressed air supply condition 11 and depending on the determined circuit cut-off condition 10, the compressed air demand 9 and/or the time control condition 18.

The valve assembly 1, the vehicular braking system 20, the vehicle 30 and the method 100 described above may beneficially contribute to improved pressure control and circuit protection in vehicular pneumatic circuits 2 and to enhanced vehicle operation efficiency.

### List of reference numerals (part of the application):

- 1: valve assembly
- 2: vehicular pneumatic circuit
- 2a: pressure-limited circuit
- 3: inlet
- 4: outlet
- 5: first switching valve
- 5a: first solenoid valve
- 6: second switching valve
- 6a: second solenoid valve
- 7: first pressure sensor
- 8: control unit
- 8a: electronic control unit
- 9: compressed air demand
- 10: circuit cut-off condition
- 11: compressed air supply condition
- 12: compressed air
- 13: valve housing
- 14: second pressure sensor
- 15: set pressure value
- 16: restriction element
- 17: circuit failure
- 18: time control condition
- 19: time control setting
- 20: vehicular braking system
- 21: pneumatic braking circuit
- 30: vehicle
- 30a: commercial vehicle
- 100: method of controlling pressure and providing circuit protection
- 101: start
- 110: providing an outlet pressure signal
- 115: providing an inlet pressure signal
- 120: determining a compressed air demand or a circuit cut-off condition
- 125: determining a compressed air supply condition
- 130a: actuating at least one switching valve
- 130b: actuating at least one switching valve
- 140: end
- f₁: first flow rate
- f₂: second flow rate
- p₁: outlet pressure signal
- p₂: inlet pressure signal
- pₛ: supply pressure
- s₁: first nominal size
- s₂: second nominal size

## Claims

1. **A valve** assembly (1) for pressure control and circuit protection in a vehicular pneumatic circuit (2), comprising:
- an inlet (3) configured to receive compressed air (12) from a supply,
- an outlet (4) configured to provide compressed air (12) to the vehicular pneumatic circuit (2),
- a first switching valve (5) and a second switching valve (6) arranged in parallel between the inlet (3) and the outlet (4),
- a first pressure sensor (7) being arranged downstream of the first switching valve (5) and the second switching valve (6) and being configured to provide an outlet pressure signal (p₁), and
- a control unit (8) configured to
∘ receive the outlet pressure signal (p₁) from the first pressure sensor (7),
∘ determine
▪ a circuit cut-off condition (10) of the vehicular pneumatic circuit (2) based on the outlet pressure signal (p₁),
▪ a compressed air demand (9) of the vehicular pneumatic circuit (2) based on the outlet pressure signal (p₁) and a predefined set pressure value (15) of the vehicular pneumatic circuit (2), and/or
▪ a time control condition (18) for providing compressed air (12) to the vehicular pneumatic circuit (2) according to a stored time control setting (19), and
∘ actuating at least one of the first switching valve (5) and the second switching valve (6) depending on the determined circuit cut-off condition (10), compressed air demand (9) and/or time control condition (18).

2. The valve assembly (1) according to claim 1, wherein the vehicular pneumatic circuit (2) is configured as a pressure-limited circuit (2a) with a predefined set pressure value (15) below a maximum supply pressure (pₛ) of the compressed air (12) received by the supply and wherein the valve assembly (1) is configured to limit the pressure of the compressed air (12) being provided to the vehicular pneumatic circuit (2).

3. The valve assembly (1) according to claim 1 or 2, wherein the first switching valve (5) and the second switching valve (6) are configured to provide different flow rates (f₁, f₂) of compressed air (12) to the outlet (4).

4. The valve assembly (1) according to claim 3, wherein the first switching valve (5) and the second switching valve (6) comprise different nominal sizes (s₁, s₂).

5. The valve assembly (1) according to any preceding claim, wherein the first switching valve (5) and the second switching valve (6) are arranged in a common valve housing (13).

6. The valve assembly (1) according to any preceding claim, wherein
- a second pressure sensor (14) is arranged upstream of the first switching valve (5) and the second switching valve (6), the second pressure sensor (14) being configured to provide an inlet pressure signal (p₂), and
- the control unit (8) is configured to
∘ receive the inlet pressure signal (p₂) from the second pressure sensor (14),
∘ determine a compressed air supply condition (11) based on the inlet pressure signal (p₂), and
∘ actuate at least one of the first switching valve (5) and the second switching valve (6) depending on the determined compressed air supply condition (11) and depending on the determined circuit cut-off condition (10), compressed air demand (9) and/or time control condition (18).

7. The valve assembly (1) according to any preceding claim, wherein the first switching valve (5) and the second switching valve (6) are configured as electrically controllable solenoid valves (5a, 6a) and wherein the control unit (8) is configured as an electronic control unit (8a).

8. The valve assembly (1) according to any preceding claim, wherein at least one of the first switching valve (5) and the second switching valve (6) is configured as a 2/2 way valve.

9. A vehicular braking system (20) comprising at least one pneumatic braking circuit (21) and the valve assembly (1) according to any preceding claim.

10. A vehicle (30), in particular a commercial vehicle (30a), comprising the valve assembly (1) according to any one of claims 1 to 8 or the vehicular braking system (20) according to claim 9.

11. A method (100) of controlling pressure and providing circuit protection in a vehicular pneumatic circuit (2), wherein the vehicular pneumatic circuit (2) is connected to the valve assembly (1) according to any one of claims 1 to 8 and wherein the method (100) comprises:
- providing (110), by the first pressure sensor (7) of the valve assembly (1), an outlet pressure signal (p₁) to the control unit (8),
- determining (120), by the control unit (8),
∘ a circuit cut-off condition (10) in the vehicular pneumatic circuit (2) based on the outlet pressure signal (p₁),
∘ a compressed air demand (9) in the vehicular pneumatic circuit (2) based on the outlet pressure signal (p₁) and a predefined set pressure value (15) of the vehicular pneumatic circuit (2), and/or
∘ a time control condition (18) for providing compressed air (12) to the vehicular pneumatic circuit (2) according to a stored time control setting (19), and
- actuating (130a) at least one of the first switching valve (5) and the second switching valve (6) of the valve assembly (1) depending on the determined circuit cut-off condition (10), compressed air demand (9) and/or time control condition (18).

12. The method (100) according to claim 11, wherein the method (100) further comprises:
- providing (115), by a second pressure sensor (14) of the valve assembly (1), an inlet pressure signal (p₂) to the control unit (8),
- determining (125), by the control unit (8), a compressed air supply condition (11) based on the inlet pressure signal (p₂), and
- actuating (130b) at least one of the first switching valve (5) and the second switching valve (6) of the valve assembly (1) depending on the determined compressed air supply condition (11) and depending on the determined circuit cut-off condition (10), compressed air demand (9) and/or time control condition (18).
